(19) Europäisches Patentamt
European Patent Office
Office européen des brevets

(11) EP 2 380 938 B1

(12) **EUROPEAN PATENT SPECIFICATION**

(45) Date of publication and mention of the grant of the patent:
**21.08.2013 Bulletin 2013/34**

(21) Application number: **10733503.6**

(22) Date of filing: **21.01.2010**

(51) Int Cl.:
***C09D 151/00*** (2006.01) ***B32B 15/082*** (2006.01)
***C08F 261/04*** (2006.01) ***C09D 5/00*** (2006.01)
***C09D 129/04*** (2006.01) ***C09D 139/04*** (2006.01)
***C09D 139/06*** (2006.01) ***C09K 3/00*** (2006.01)

(86) International application number:
**PCT/JP2010/050669**

(87) International publication number:
**WO 2010/084896 (29.07.2010 Gazette 2010/30)**

(54) **HYDROPHILIZING AGENT FOR ALUMINUM-CONTAINING METAL MATERIAL, HYDROPHILIZING METHOD, AND HYDROPHILIZED ALUMINUM-CONTAINING METAL MATERIAL**

HYDROPHILIERUNGSMITTEL FÜR EIN ALUMINIUMHALTIGES METALLMATERIAL, HYDROPHILIERUNGSVERFAHREN UND HYDROPHILIERTES ALUMINIUMHALTIGES METALLMATERIAL

AGENT D'HYDROPHILISATION POUR MATÉRIAU MÉTALLIQUE CONTENANT DE L'ALUMINIUM, PROCÉDÉ D'HYDROPHILISATION, ET MATÉRIAU MÉTALLIQUE CONTENANT DE L'ALUMINIUM HYDROPHILISÉ

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **21.01.2009 JP 2009010507**

(43) Date of publication of application:
**26.10.2011 Bulletin 2011/43**

(73) Proprietor: **Nihon Parkerizing Co., Ltd.**
**Tokyo 103-0027 (JP)**

(72) Inventors:
- **KATAOKA, Toshihisa**
  **Tokyo 103-0027 (JP)**
- **AOYAGI, Shinji**
  **Tokyo 103-0027 (JP)**
- **OTAKE, Masato**
  **Tokyo 103-0027 (JP)**

(74) Representative: **Beckmann, Claus**
**Kraus & Weisert**
**Patent- und Rechtsanwälte**
**Thomas-Wimmer-Ring 15**
**80539 München (DE)**

(56) References cited:
**WO-A2-2004/050715** **JP-A- 4 366 182**
**JP-A- 6 322 292** **JP-A- 10 036 757**
**JP-A- 2006 213 840** **JP-A- 2007 084 694**
**JP-A- 2008 274 181** **JP-A- 2009 108 111**
**JP-T- 2006 508 231** **US-A- 4 380 600**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 380 938 B1

## Description

[Field of the Invention]

The present invention relates to a hydrophilizing agent for an aluminum-containing metal material, a hydrophilizing method, and a hydrophilized aluminum-containing metal material, and more particularly, to a hydrophilizing agent and the like for forming a coating film that can impart excellent wettability for dew condensation to an aluminum-containing metal material used for a heat exchanger and the like.

[Background Art]

Conventionally, many of the heat exchangers formed by various assembly methods using an aluminum-containing metal materials and the like as the members, have been designed such that the surface area of the radiator and the cooling unit to be as large as possible, in order to enhance heat dissipation or cooling effect. Additionally, the spacing of the fins is too close for downsizing. Thus, when the air conditioner is operated (in a cooling mode), atmospheric moisture is condensed between the fins to cause dew condensation. The more hydrophobic the surface of a fin, the more likely the dew condensation water is to collect into droplets. If the water collects into droplets, the spacing of the fins is likely to be clogged. If the spacing is clogged, the airflow resistance increases, and then the heat exchange efficiency decreases, which also causes the problem that the clogging droplets spatter in the downstream air direction. Therefore, several methods for imparting a hydrophilic property to the surface of a member of a heat exchanger have been proposed and carried out, in order to prevent dew condensation water from remaining in the spacing of the fins and from causing the clogging.

The methods for imparting a hydrophilic property to the surface of a member of a heat exchanger include, for example, a method in which polyvinyl alcohol is mixed with polyvinylpyrrolidone having a specific degree of polymerization in specific proportions (see Patent Document 1), and a method in which polyvinyl alcohol is mixed with polyoxyethylene glycol (see Patent Document 2). In these methods, an ingredient with a high hydrophilicity (hereinafter referred to as "highly hydrophilic ingredient ") such as polyvinylpyrrolidone and polyoxyethylene glycol is used in mixing with polyvinyl alcohol to impart a hydrophilic property. Also, a method in which polyvinyl alcohol is mixed with silica fine particles (see Patent Document 3) and the like have been proposed.

[Prior Art References]

[Patent Document]

Patent Document 1: Japanese Laid-Open Patent Application No. JP-A-04-366182
Patent Document 2: Japanese Laid-Open Patent Application No. JP-A-2000-345362
Patent Document 3: Japanese Laid-Open Patent Application No. JP-A-2002-30462

[Summary of the Invention]

[The Problems Solved by the Invention]

However, in the conventional methods proposed in Patent Documents 1 and 2 described above, a highly hydrophilic ingredient is only mixed with polyvinyl alcohol, and it is not sufficient for effectively fixing the highly hydrophilic ingredient into a coating film. Thus there is a concern about durability of the hydrophilicity. Although it is considered that the above methods provide a coating film with a low water contact angle, the coating film has not enough wettability for due condensation in a practical environment. As with the methods described in Patent Documents 1 and 2, the conventional method proposed in Patent Document 3 described above is considered to provide a coating film with a low water contact angle, but the coating film has not enough wettability for due condensation in a practical environment.

Additionally, in recent years, downsizing of the heat exchangers (decrease in the spacing of the fins) is making a further progress, and it is easy to conceive that this trend will continue. Therefore, for the hydrophilicity required for an aluminum-containing metal material used for a heat exchanger, merely having a low water contact angle is not sufficient, and it is important that dew condensation water generated in a practical environment to be allowed to uniformly and rapidly wet out.

The present invention provides a solution for the problems of the above conventional methods. An object of the invention is to provide a hydrophilizing agent for an aluminum-containing metal material, for forming a coating film

that can impart excellent wettability for dew condensation to an aluminum-containing metal material used for a heat exchanger and the like. Another object of the invention is to provide a hydrophilizing method using the hydrophilizing agent of the invention, and a hydrophilized aluminum-containing metal material.

[Problem Resolution Means]

A hydrophilizing agent for an aluminum-containing metal material of the invention for solving the above-described problems comprises: a modified polyvinyl alcohol having a polymer and/or copolymer of at least one type of N-vinyl lactam in a side chain of the polyvinyl alcohol having vinyl alcohol and vinyl acetate as its components; and a water-soluble crosslinking agent capable of binding the lactam moiety and/or the hydroxyl group of the modified polyvinyl alcohol.

According to the invention, the coating film formed onto an aluminum-containing metal material by applying and drying the treatment agent that contains a modified polyvinyl alcohol having a polymer and/or copolymer of at least one type of N-vinyl lactam in a side chain of the polyvinyl alcohol and a water-soluble crosslinking agent capable of binding the lactam moiety and/or the hydroxyl group of the modified polyvinyl alcohol, has an excellent hydrophilicity. And by applying the agent to an aluminum-containing metal material that constitutes a heat exchanger or the like for example, this allows an excellent wettability for due condensation, which solves the problems of decrease in heat exchange efficiency due to clogging by dew condensation water, droplet spattering, and the like.

In a preferred embodiment of the hydrophilizing agent for an aluminum-containing metal material of the invention, the polyvinyl alcohol is represented by the following Formula (1). In the following Formula (1), $R_1$ and $R_2$ are the same or different side chain; part or all of $R_1$ and $R_2$ is a polymer and/or copolymer of at least one type of N-vinyl lactam that is graft polymerized; and $R_1$ and $R_2$ that is not graft polymerized represent H.

[Chemical Formula 1]

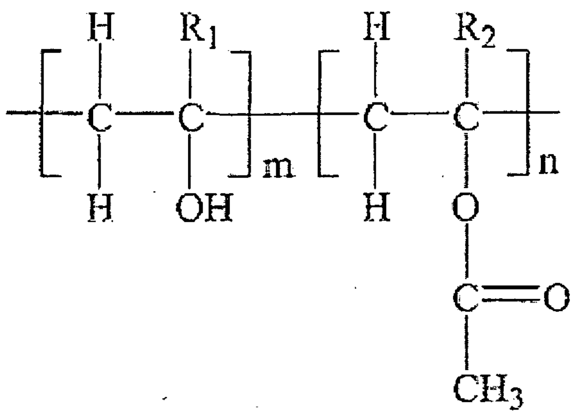

(1)

In a preferred embodiment of the hydrophilizing agent for an aluminum-containing metal material of the invention, the modified polyvinyl alcohol is obtained by mixing and graft polymerizing of at least one type of N-vinyl lactam (i) with polyvinyl alcohol (ii) at a ratio of (i):(ii)=0.1:0.9 to 0.9:0.1 on a solid weight basis.

In a preferred embodiment of the hydrophilizing agent for an aluminum-containing metal material of the invention, part or all of the at least one type of N-vinyl lactam is N-vinylpyrrolidone.

In a preferred embodiment of the hydrophilizing agent for an aluminum-containing metal material of the invention, the water-soluble crosslinking agent has one or more organic compounds that have two or more of one or more functional groups selected from a carboxyl group, a phosphonic group, and a hydroxyl group.

A hydrophilizing method of the invention for solving the above-described problems comprises: applying the hydrophilizing agent according to any one of claims 1 to 5 to part or all of the surface of an untreated or cleaned aluminum-containing metal material; and drying the agent to form a coating film.

A hydrophilized aluminum-containing metal material of the invention for solving the above-described problems has on part or all of its surface a hydrophilic coating film composed of the hydrophilizing agent, the hydrophilic coating film comprising: a modified polyvinyl alcohol having a polymer and/or copolymer of at least one type of N-vinyl lactam in a side chain of the polyvinyl alcohol having vinyl alcohol and vinyl acetate as its components; and a water-soluble crosslinking agent capable of binding the lactam moiety and/or the hydroxyl group of the modified polyvinyl alcohol.

[Efficacy of the Invention]

When the coating film is formed by applying the hydrophilizing agent for an aluminum-containing metal material of the invention to an aluminum-containing metal material and dried it, the coating film has excellent hydrophilicity. And by applying the agent to an aluminum-containing metal material that constitutes a heat exchanger or the like for example, this allows an excellent wettability for due condensation, which solves the problems of decrease in heat exchange efficiency due to clogging by dew condensation water, droplet spattering, and the like. Additionally, a hydrophilic coating film formed using the hydrophilizing method of the invention can maintain excellent wettability for due condensation and excellent hydrophilicity in long-term use.

The aluminum-containing metal material of the invention, which has a hydrophilic coating film on part or all of the surface, has a very high practical value when it is used for a heat exchanger, because of the hydrophilic coating film having excellent wettability for due condensation, which solves the problems of decrease in heat exchange efficiency due to clogging by dew condensation water, droplet spattering, and the like. Additionally, the aluminum-containing metal material of the invention not only has high applicability to air conditioning components, but also can be applied to other wide range of application.

[Brief Descriptions of the Drawings]

FIG. 1 is a schematic cross section of an example of the aluminum-containing metal material of the invention.
FIG. 2 is a schematic cross section of an example of a heat exchanger treated with the hydrophilizing agent for an aluminum-containing metal material of the invention (a hydrophilized aluminum-containing metal material).
FIG. 3 is a graph showing the relationship between "contact angle", which is a general indicator for evaluating hydrophilicity, and "wettability for due condensation", which is used as an evaluation indicator in the invention.

[Embodiment of the Invention]

The hydrophilizing agent for an aluminum-containing metal material, the hydrophilizing method, and the hydrophilized aluminum-containing metal material of the invention will be described in more detail with reference to the embodiments. As used herein, "weight" and "mass", and "percent by weight" and "percent by mass" are used synonymously.

[Hydrophilizing Agent for Aluminum-Containing Metal Material]

The hydrophilizing agent for an aluminum-containing metal material (hereinafter referred to as "hydrophilizing agent" for short) of the invention contains Modified Polyvinyl Alcohol (A) having a polymer and/or copolymer of at least one type of N-vinyl lactam in a side chain of the polyvinyl alcohol having vinyl alcohol and vinyl acetate as its components; and Water-Soluble Crosslinking Agent (B) capable of binding the lactam moiety and/or the hydroxyl group of Modified Polyvinyl Alcohol (A).

Briefly, the hydrophilizing agent of the invention contains Modified Polyvinyl Alcohol (A) and Water-Soluble Crosslinking Agent (B). Modified Polyvinyl Alcohol (A) has at least one type of N-vinyl lactam as a polymer and/or copolymer in a side chain of the polyvinyl alcohol having vinyl alcohol and vinyl acetate as its components. On the other hand, Water-Soluble Crosslinking Agent (B) is a crosslinking agent capable of binding the lactam moiety and/or the hydroxyl group of Modified Polyvinyl Alcohol. By applying and heat-drying such hydrophilizing agent on an aluminum-containing metal material, it allows to attain an aluminum-containing metal material having a hydrophilic coating film with excellent wettability for due condensation.

(Modified Polyvinyl Alcohol)

First, Modified Polyvinyl Alcohol (A) will be described. Modified Polyvinyl Alcohol (A) has a polymer and/or copolymer of at least one type of N-vinyl lactam in a side chain of the polyvinyl alcohol having vinyl alcohol and vinyl acetate as its components, and is represented by the following Formula (1).

[Chemical Formula 2]

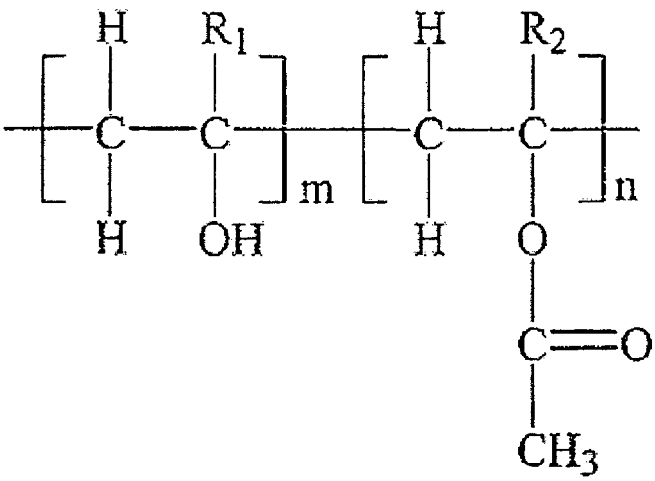

(1)

In Formula (1), $R_1$ and $R_2$ are the same or different side chain; part or all of $R_1$ and $R_2$ is a polymer and/or copolymer of at least one type of N-vinyl lactam that is graft polymerized; and $R_1$ and $R_2$ that is not graft polymerized represent H. And m is the number of vinyl alcohol units, and n is the number of vinyl acetate units. Hereinafter, [m+n] can be referred to as "degree of polymerization", and [m/(m+n)x100] can be referred to as " degree of saponification".

The polyvinyl alcohol has vinyl alcohol and vinyl acetate as its components, and it is a water-soluble polymer produced by at least partially saponifying vinyl acetate. The polyvinyl alcohol is represented by Formula (2) as described below. It is not specially limited as far as it is water-soluble, and any commercially-available polyvinyl alcohol may be used.

[Chemical Formula 3]

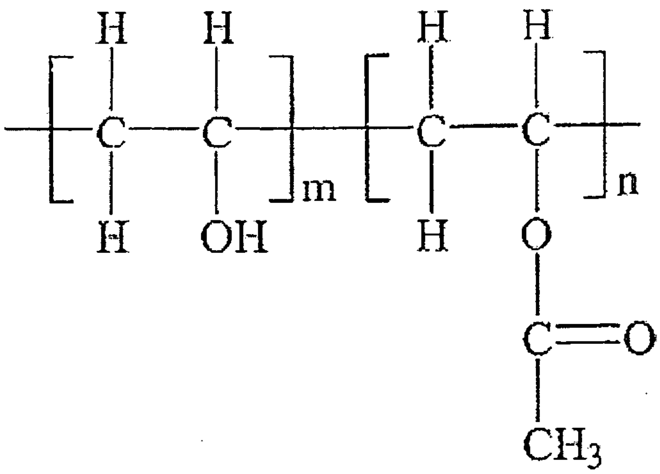

(2)

In Formula (2), m is the number of vinyl alcohol units, and n is the number of vinyl acetate units. [m+n] is referred to as "degree of polymerization", and [m/(m+n)×100] is referred to as "degree of saponification". The polymer that has a degree of saponification [m/(m+n)x 100] of from 98% inclusive to 100% exclusive can be called "fully saponified"; the polymer that has a degree of saponification of from 90% inclusive to 98% exclusive can be called "almost-fully saponified"; and the polymer that has a degree of saponification of less than 90% can be called "partially saponified".

The degree of saponification [m/(m+n)×100] of the polyvinyl alcohol is not specially limited as far as it is water-soluble. Any polyvinyl alcohol that has various degrees of saponification may be used. However, polyvinyl alcohol with a low degree of saponification can lead to insufficient formation of the coating film, which can result in decrease in the durability of the coating film against water (hereinafter referred to as "water resistance") and decrease in the wettability for due condensation. Thus, the polyvinyl alcohol preferably has a degree of saponification of 70% or more, and especially preferably 90% or more.

The degree of polymerization [m+n] of the polyvinyl alcohol is not specially limited as far as it is water-soluble.

Although any polyvinyl alcohol that has various degrees of polymerization may be used, the polyvinyl alcohol has preferably a degree of polymerization of from 400 to 3,000. A degree of polymerization of less than 400 can lead to insufficient formation of the coating film, which can decrease the water resistance and the wettability for due condensation. On the other hand, a degree of polymerization of more than 3,000 allows the formation of the coating film, and the wettability for due condensation and the like, which is the spirit of the invention, but it can cause the solution viscosity to excessively increase, which can decrease the workability in the manufacturing process of the hydrophilizing agent and decrease the workability of hydrophilization with the hydrophilizing agent.

As shown in the following Formula (3), the polyvinyl alcohol may be a water-soluble derivative that has a copolymer component different from vinyl alcohol and vinyl acetate.

[Chemical Formula 4]

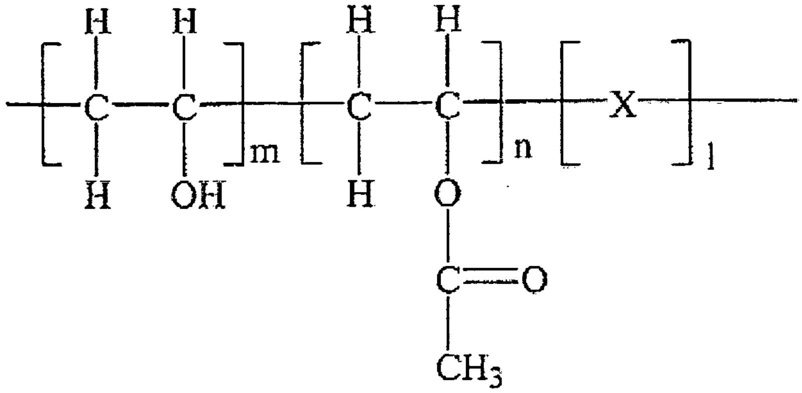

(3)

In Formula (3), X is a copolymer component different from vinyl alcohol and vinyl acetate; m is the number of vinyl alcohol units; n is the number of vinyl acetate units; and 1 is the number of the copolymer components different from vinyl alcohol and vinyl acetate.

The copolymer component X different from vinyl alcohol and vinyl acetate, can include anionic comonomers, nonionic comonomers, and cationic comonomers. For example, the anionic comonomers can include acrylic acid, methacrylic acid, itaconic acid, and maleic acid, or salts thereof and the like. The nonionic comonomers can include styrene, acrylic nitrile, vinyl ether, (meth)acrylamide, N-methylol (meth)acrylamide, methyl(meth)acrylate, hydroxyethyl (meth) acrylate, vinylpyrrolidone, acroylmorpholine, vinyl acetate and the like. The cationic comonomers can include aminoethyl (meth)acrylate, N-hydroxypropyl aminoethyl(meth)acrylate, vinylimidazole, and N,N-dimethyldiallylamine and the like. A plurality of copolymer components X may exist in the polyvinyl alcohol of Formula (3), to the extent that they do not impair the spirit of the invention and the performance of the coating film.

The at least one type of N-vinyl lactam has a structure with an unsaturated ethylene group attached to a nitrogen atom in the lactam. The N-vinyl lactam is not specially limited as far as it is water-soluble, and includes, for example, N-vinylpyrrolidone, 3-methyl-N-vinylpyrrolidone, 4-methyl-N-vinylpyrrolidone, 5-methyl-N-vinylpyrrolidone, N-vinylpyridone, N-vinylcaprolactam and the like. Especially, N-vinylpyrrolidone is preferably used and it is preferred to use N-vinylpyrrolidone as part or all of the at least one type ofN-vinyl lactam. Such at least one type of N-vinyl lactam is graft-polymerized as part of a side chain of the polyvinyl alcohol and compose the modified polyvinyl alcohol.

Modified Polyvinyl Alcohol (A) has a polymer and/or copolymer of at least one type of N-vinyl lactam in a side chain of the polyvinyl alcohol, and is obtained by graft-polymerization of the at least one type of N-vinyl lactam with the polyvinyl alcohol. The modified polyvinyl alcohol is not specially limited as far as it is obtained by the graft-polymerization. Any modified polyvinyl alcohol obtained by the graft-polymerization in different proportions may be used. In order to give a sufficient degree of polymerization of the highly hydrophilic graft chains and a sufficient amount of the chains added, the modified polyvinyl alcohol can be obtained by mixing and graft-polymerizing of the at least one type of N-vinyl lactam (i) with the polyvinyl alcohol (ii) at a ratio of (i):(ii)=0.1:0.9 to 0.9:0.1 on a solid weight basis. It is preferred to use the modified polyvinyl alcohol obtained by mixing and graft-polymerizing at a ratio of (i):(ii)=0.2:0.8 to 0.8:0.2 on a solid weight basis.

If the ratio of the N-vinyl lactam (i) is less than 0.1, the degree of polymerization of the graft chains and/or the amount of the chains added can be insufficient, while if the ratio is more than 0.9, the degree of polymerization of the graft chains and/or the amount of the chains added can be excessive, with the result that the formation of the coating

film can be influenced and the water resistance can be decreased, failing to provide the wettability for due condensation.

Modified Polyvinyl Alcohol (A) obtained by the graft-polymerization at the mixing ratio described above may contain a monomer, homopolymer, and copolymer of the N-vinyl lactam that remains ungrafted polymerized. Additionally, the graft chain may contain a monomer capable of copolymerizing with N-vinyl lactam to the extent that the spirit of the invention is not impaired.

The molecular weight of the polymer and/or copolymer of the N-vinyl lactam (i) in a side chain of Modified Polyvinyl Alcohol (A) is not specially limited, as far as the graft-polymerization is carried out at the mixing ratio described above. In order to give the superior wettability for due condensation, which is the spirit of the invention, the molecular weight preferably ranges from 1,000 to 200,000. If the molecular weight is less than 1,000, it may not be able to give the wettability for due condensation due to an insufficient molecular weight of the graft chains, while if the molecular weight is more than 200,000, formulation of the coating film may be influenced due to an excessive molecular weight of the graft chains and the water resistance may decrease, with the result that the wettability for due condensation can not be provided.

(Water-Soluble Crosslinking Agent)

Next, Water-Soluble Crosslinking Agent (B) will be described. Water-Soluble Crosslinking Agent (B) is contained in the hydrophilizing agent in order to maintain the water resistance and the excellent wettability for due condensation of the resultant coating film. And it is a crosslinking agent capable of binding the lactam moiety and/or the hydroxyl group of Modified Polyvinyl Alcohol (A). Water-Soluble Crosslinking Agent (B) is not specially limited as far as it forms a cross-linked structure with the lactam moiety and/or the hydroxyl group. One or more types of water-soluble compounds selected from inorganic and organic crosslinking agents may be used.

The preferred inorganic crosslinking agents are a metal compound capable of forming a complex compound with the hydroxyl group of Modified Polyvinyl Alcohol (A), including, for example, compounds of metal such as chromium, zirconium, titanium, aluminum, silica, zinc and the like. Additionally, if needed, the inorganic crosslinking agents can be used in combination with an organic crosslinking agent.

From the viewpoint of crosslinking, the organic crosslinking agents are more preferably an organic compound that has two or more functional groups capable of reacting with the lactam moiety and/or the hydroxyl group of Modified Polyvinyl Alcohol (A). The functional groups capable of reacting with the lactam moiety and/or the hydroxyl group include, for example, a (blocked) isocyanate group, a carboxyl group, a phosphonic group, a hydroxyl group, and an epoxy group. The specific examples of the organic compounds that have the two or more functional groups include, for example, hexamethylene diisocyanate, tetramethylene diisocyanate, sorbitol polyglycidyl ether, polyglycerol polyglycidyl ether, pentaerythritol polyglycidyl ether, oxalic acid, malonic acid, maleic acid, fumaric acid, succinic acid, malic acid, citric acid, glutamic acid, aspartic acid, tartaric acid, phthalic acid, itaconic acid, mellitic acid, trimellitic acid, trimesic acid, pyromellitic acid, naphthalene tetracarboxylic acid, propane dicarboxylic acid, butane dicarboxylic acid, pentane dicarboxylic acid, hexane dicarboxylic acid, heptane dicarboxylic acid, butane tricarboxylic acid, butane tetracarboxylic acid, cyclohexane tetracarboxylic acid, hexane tricarboxylic acid, polyacrylic acid, polymethacrylic acid, acrylic acid-methacrylic acid copolymers, 1-hydroxyethylidene-1,1-diphosphonic acid, 2-phosphonobutane-1,2,4-tricarboxylic acid, nitrilotris methylene phosphonic acid, ethylene diamine tetra(methylene phosphonic acid), phosphonic group-containing polymers and the like.

More preferably, Soluble Crosslinking Agent (B) contained in the hydrophilizing agent is an organic compound that has two or more of one or more functional groups selected from a carboxyl group, a phosphonic group, and a hydroxyl group, in order to give both of the water resistance and the wettability for due condensation to the resultant coating film. The organic compounds that have the two or more functional groups include, for example, oxalic acid, malonic acid, maleic acid, fumaric acid, succinic acid, malic acid, citric acid, glutamic acid, aspartic acid, tartaric acid, phthalic acid, itaconic acid, mellitic acid, trimellitic acid, trimesic acid, pyromellitic acid, naphthalene tetracarboxylic acid, propane dicarboxylic acid, butane dicarboxylic acid, pentane dicarboxylic acid, hexane dicarboxylic acid, heptane dicarboxylic acid, butane tricarboxylic acid, butane tetracarboxylic acid, cyclohexane tetracarboxylic acid, hexane tricarboxylic acid, polyacrylic acid, polymethacrylic acid, acrylic acid-methacrylic acid copolymers, 1-hydroxyethylidenc-1,1-diphosphonic acid, 2-phosphonobutane-1,2,4-tricarboxylic acid, nitrilotris methylene phosphonic acid, ethylene diamine tetra (methylene phosphonic acid), phosphonic group-containing polymers and the like.

Although the amount (mixed amount) of Soluble Crosslinking Agent (B) in the hydrophilizing agent is not specially limited, preferably 0.1 to 200 parts by weight and more preferably 1.0 to 100 parts by weight of Soluble Crosslinking Agent (B) is contained in 100 parts by weight of Modified Polyvinyl Alcohol (A) on a solid weight basis, in order to provide both of the coating film-forming property and the wettability for due condensation. If the mixed amount of Soluble Crosslinking Agent (B) is less than 0.1 parts by weight, crosslinking is insufficient in formation of the coating film and then the water resistance is reduced, with the result that the wettability for due condensation may not be provided. If the mixed amount is more than 200 parts by weight, a bond with the hydrophilic functional group is excessive, with the result that

the wettability for due condensation may decrease and the water resistance may be reduced due to remaining crosslinking agent that did not engaged in the cross-linking reaction.

(Additives)

A rust inhibitor, a leveling agent, a filler such as colloidal silica, a plastic pigment and the like, a colorant, a surfactant, an antifoaming agent, an antimicrobial and antifungal agent, and the like may be added to the hydrophilizing agent of the invention to the extent that they do not impair the spirit of the invention and the performance of the coating film.

[Hydrophilizing Method]

Next, a method for using the hydrophilizing agent of the invention to form a hydrophilized coating film on an aluminum-containing metal material that is a material to be coated or a heat exchanger made from an aluminum-alloy. In the hydrophilizing method of the invention, the hydrophilizing agent according to the invention as described above is applied to part or all of the surface of an untreated or cleaned aluminum-containing metal material and then the agent is dried to form a coating film.

The material to be coated is preferably an aluminum-containing metal material (an aluminum or aluminum alloy material) used in applications that require wettability for due condensation, and is especially preferably a heat exchanger made from an aluminum alloy. Although it is preferred to clean such material with an alkaline or acidic aqueous cleaner in advance, the cleaning treatment may be omitted when it is not required. Further, where necessary, the untreated or cleaned aluminum-containing metal material may be rust-proofed before the hydrophilizing agent is applied and dried. The rust-proofing can include formation of a corrosion resistant coating film (chemical conversion coating film or corrosion resistant primer layer). Although the corrosion resistant coating film is not specially limited, it can include known underlying coating films such as chromate, zinc phosphate, titanium, zircon, organic coating films and the like.

Then, the hydrophilizing agent is applied to the material to be coated using a suitable application means to give the required coating film amount, and the agent is heat-dried. The application means can include, for example, roll coating, spraying, dipping and the like. Although heat-drying is not specially limited, the agent is heat-dried preferably at a temperature of from 100 to 220°C for a period of from 5 seconds to 120 minutes, and more preferably at a temperature of from 120 to 200°C. If the drying temperature is lower than 100°C, formation of the coating film is insufficient, with the result that the water resistance and the wettability for due condensation may not be provided. If the drying temperature is higher than 220°C, the reaction between the crosslinking agent and the hydrophilic functional group goes too far, with the result that the wettability for due condensation may be reduced. The hydrophilic coating film formed by such method has preferably an amount of from 0.05 to 5.0g/m2. If the amount is less than 0.05g/m2, the ability of the hydrophilic coating film to cover a substrate may be insufficient. If the amount is more than 5.0g/m2, it is not preferred from a cost perspective, although it has no problem in the performance that is the spirit of the invention.

[Aluminum-Containing Metal Material]

The aluminum-containing metal material of the invention has on part or all of its surface a hydrophilic coating film composed of the hydrophilizing agent containing a modified polyvinyl alcohol having a polymer and/or copolymer of at least one type of N-vinyl lactam in a side chain of the polyvinyl alcohol having vinyl alcohol and vinyl acetate as its components and a water-soluble crosslinking agent capable of binding the lactam moiety and/or the hydroxyl group of the modified polyvinyl alcohol. The hydrophilic coating film is formed using the hydrophilizing method as described above.

FIG. 1 is a schematic cross section of an example of the aluminum-containing metal material of the invention. FIG. 2 is a schematic cross section of an example of a heat exchanger treated with the hydrophilizing agent for an aluminum-containing metal material of the invention (a hydrophilized aluminum-containing metal material). The constitution shown in FIG. 1 and 2 is just an example and the invention is not limited to the illustrated constitution. The example shown in FIG 1 has Corrosion Resistant Coating films 2 and 2' that is formed if needed, on the both surfaces of Aluminum-Containing Metal Material 1 that is the material to be coated. And Hydrophilic Coating films 3 and 3' are provided on the surface of Corrosion Resistant Coating films 2 and 2', respectively. Aluminum-Containing Metal Material 1 may or may not have Corrosion Resistant Coating films 2 and 2', and Hydrophilic Coating film 3 may be provided only on the required surface (one surface). In the example shown in FIG. 2, Heat Exchanger 20 that has Radiators (Fins) 21 between adjacent Refrigerant Pipes (Tubes) 22 is shown, but the invention is not limited to the heat exchangers having such constitution. That is, the hydrophilized heat exchanger (aluminum-containing metal material) can be in the form of tubes (hollow tubes), solid tubes, hollow boards, or solid boards, and Hydrophilic Coating films 3 are provided on such heat exchanger to give Aluminum-Containing Metal Material (Heat Exchanger) 20 of the invention.

The foregoing has described the hydrophilizing agent for an aluminum-containing metal material, the hydrophilizing method, and the hydrophilized aluminum-containing metal material of the invention. The coating film formed by

applying and drying the hydrophilizing agent for an aluminum-containing metal material of the invention on an aluminum-containing metal material, has an excellent hydrophilicity. Application of the coating film to an aluminum-containing metal material that constitutes a heat exchanger or the like for example, this allows an excellent wettability for due condensation, which solves the problems of decrease in heat exchange efficiency due to clogging by dew condensation water, droplet spattering, and the like. Additionally, a hydrophilic coating film formed using the hydrophilizing method of the invention can maintain excellent wettability for due condensation and excellent hydrophilicity in long-term use. The aluminum-containing metal material of the invention, which has a hydrophilic coating film on part or all of the surface, has a very high practical value when it is used for a heat exchanger, because the hydrophilic coating film has excellent wettability for due condensation, which solves the problems of decrease in heat exchange efficiency due to clogging by dew condensation water, droplet spattering, and the like. Also, the aluminum-containing metal material of the invention not only has high applicability to air conditioning components, but also can be applied to a broad range of other applications.

[Examples]

The invention will be described concretely with reference to the examples and the comparative examples. A method for producing the hydrophilizing agent used in Examples 1-18 and the treatment agent used in Comparative Examples 1-6 will be described below. Table 1 shows the composition of the hydrophilizing agent used in Examples 1-18, and Table 2 shows the composition of the treatment agent used in Comparative Examples 1-6. It should be noted that Examples are not intended to limit the scope of the invention.

<Example 1>

N-vinylcaprolactam, N-vinylpyrrolidone, and fully saponified polyvinyl alcohol represented by Formula (2) described above (with a degree of saponification of 98% or more and a degree of polymerization of 1,100) were mixed at a ratio of 0.05:0.05:0.9 on a solid weight basis and graft polymerized to give a modified polyvinyl alcohol. 90g of an aqueous modified polyvinyl alcohol solution that was prepared by adding pure water to the resultant modified polyvinyl alcohol to adjust the solid concentration to 3% and 10g of an aqueous crosslinking agent solution that was prepared by adding water to 1,2,3,4-butane tetracarboxylic acid as the crosslinking agent to adjust the solid concentration to 3% were mixed to give the hydrophilizing agent of Example 1.

<Example 2>

N-vinylcaprolactam, N-vinylpyrrolidone, and fully saponified polyvinyl alcohol represented by Formula (2) described above (with a degree of saponification of 98% or more and a degree of polymerization of 1,100) were mixed at a ratio of 0.25:0.25:0.5 on a solid weight basis and graft polymerized to give a modified polyvinyl alcohol. 90g of an aqueous modified polyvinyl alcohol solution that was prepared by adding pure water to the resultant modified polyvinyl alcohol to adjust the solid concentration to 3% and 10g of an aqueous crosslinking agent solution that was prepared by adding water to 1,2,3,4-butane tetracarboxylic acid as the crosslinking agent to adjust the solid concentration to 3% were mixed to give the hydrophilizing agent of Example 2.

<Example 3>

N-vinylpyridone, N-vinylpyrrolidone, and fully saponified polyvinyl alcohol represented by Formula (2) described above (with a degree of saponification of 98% or more and a degree of polymerization of 1,100) were mixed at a ratio of 0.25:0.25:0.5 on a solid weight basis and graft polymerized to give a modified polyvinyl alcohol. 90g of an aqueous modified polyvinyl alcohol solution that was prepared by adding pure water to the resultant modified polyvinyl alcohol to adjust the solid concentration to 3% and 10g of an aqueous crosslinking agent solution that was prepared by adding water to 1,2,3,4-butane tetracarboxylic acid as the crosslinking agent to adjust the solid concentration to 3% were mixed to give the hydrophilizing agent of Example 3.

<Example 4>

N-vinylpyridone, N-vinylcaprolactam, and fully saponified polyvinyl alcohol represented by Formula (2) described above (with a degree of saponification of 98% or more and a degree of polymerization of 1,100) were mixed at a ratio of 0.25:0.25:0.5 on a solid weight basis and graft polymerized to give a modified polyvinyl alcohol. 90g of an aqueous modified polyvinyl alcohol solution that was prepared by adding pure water to the resultant modified polyvinyl alcohol to adjust the solid concentration to 3% and 10g of an aqueous crosslinking agent solution that was prepared by adding water to 1,2,3,4-butane tetracarboxylic acid as the crosslinking agent to adjust the solid concentration to 3%

were mixed to give the hydrophilizing agent of Example 4.

<Example 5>

N-vinylcaprolactam, N-vinylpyrrolidone, and fully saponified polyvinyl alcohol represented by Formula (2) described above (with a degree of saponification of 98% or more and a degree of polymerization of 1,100) were mixed at a ratio of 0.45:0.45:0.1 on a solid weight basis and graft polymerized to give a modified polyvinyl alcohol. 90g of an aqueous modified polyvinyl alcohol solution that was prepared by adding pure water to the resultant modified polyvinyl alcohol to adjust the solid concentration to 3% and 10g of an aqueous crosslinking agent solution that was prepared by adding water to 1,2,3,4-butane tetracarboxylic acid as the crosslinking agent to adjust the solid concentration to 3% were mixed to give the hydrophilizing agent of Example 5.

<Example 6>

N-vinylcaprolactam, N-vinylpyrrolidone, and fully saponified polyvinyl alcohol represented by Formula (2) described above (with a degree of saponification of 98% or more and a degree of polymerization of 400) were mixed at a ratio of 0.1:0.1:0.8 on a solid weight basis and graft polymerized to give a modified polyvinyl alcohol. 90g of an aqueous modified polyvinyl alcohol solution that was prepared by adding pure water to the resultant modified polyvinyl alcohol to adjust the solid concentration to 3% and 10g of an aqueous crosslinking agent solution that was prepared by adding water to 1,2,3,4-butane tetracarboxylic acid as the crosslinking agent to adjust the solid concentration to 3% were mixed to give the hydrophilizing agent of Example 6.

<Example 7>

N-vinylcaprolactam, N-vinylpyrrolidone, and fully saponified polyvinyl alcohol represented by Formula (2) described above (with a degree of saponification of 98% or more and a degree of polymerization of 1,700) were mixed at a ratio of 0.1:0.1:0.8 on a solid weight basis and graft polymerized to give a modified polyvinyl alcohol. 90g of an aqueous modified polyvinyl alcohol solution that was prepared by adding pure water to the resultant modified polyvinyl alcohol to adjust the solid concentration to 3% and 10g of an aqueous crosslinking agent solution that was prepared by adding water to 1,2,3,4-butane tetracarboxylic acid as the crosslinking agent to adjust the solid concentration to 3% were mixed to give the hydrophilizing agent of the example.

<Example 8>

N-vinylcaprolactam, N-vinylpyrrolidone, and fully saponified polyvinyl alcohol represented by Formula (2) described above (with a degree of saponification of 98% or more and a degree of polymerization of 3,000) were mixed at a ratio of 0.4:0.4:0.2 on a solid weight basis and graft polymerized to give a modified polyvinyl alcohol. 90g of an aqueous modified polyvinyl alcohol solution that was prepared by adding pure water to the resultant modified polyvinyl alcohol to adjust the solid concentration to 3% and 10g of an aqueous crosslinking agent solution that was prepared by adding water to 1,2,3,4-butane tetracarboxylic acid as the crosslinking agent to adjust the solid concentration to 3% were mixed to give the hydrophilizing agent of Example 8.

<Example 9>

N-vinylcaprolactam and fully saponified polyvinyl alcohol represented by Formula (2) described above (with a degree of saponification of 98% or more and a degree of polymerization of 1100) were mixed at a ratio of 0.5:0.5 on a solid weight basis and graft polymerized to give a modified polyvinyl alcohol. 90g of an aqueous modified polyvinyl alcohol solution that was prepared by adding pure water to the resultant modified polyvinyl alcohol to adjust the solid concentration to 3% and 10g of an aqueous crosslinking agent solution that was prepared by adding water to 1,2,3,4-butane tetracarboxylic acid as the crosslinking agent to adjust the solid concentration to 3% were mixed to give the hydrophilizing agent of Example 9.

<Example 10>

3-methyl-N-vinylpyrrolidone and fully saponified polyvinyl alcohol represented by Formula (2) described above (with a degree of saponification of 98% or more and a degree of polymerization of 1,100) were mixed at a ratio of 0.5: 0.5 on a solid weight basis and graft polymerized to give a modified polyvinyl alcohol. 90g of an aqueous modified polyvinyl alcohol solution that was prepared by adding pure water to the resultant modified polyvinyl alcohol to adjust

the solid concentration to 3 % and 10g of an aqueous crosslinking agent solution that was prepared by adding water to 1,2,3,4-butane tetracarboxylic acid as the crosslinking agent to adjust the solid concentration to 3% were mixed to give the hydrophilizing agent of Example 10.

<Example 11>

N-vinylpyridone and fully saponified polyvinyl alcohol represented by Formula (2) described above (with a degree of saponification of 98% or more and a degree of polymerization of 1,100) were mixed at a ratio of 0.5:0.5 on a solid weight basis and graft polymerized to give a modified polyvinyl alcohol. 90g of an aqueous modified polyvinyl alcohol solution that was prepared by adding pure water to the resultant modified polyvinyl alcohol to adjust the solid concentration to 3% and 10g of an aqueous crosslinking agent solution that was prepared by adding water to 1,2,3,4-butane tetracarboxylic acid as the crosslinking agent to adjust the solid concentration to 3% were mixed to give the hydrophilizing agent of Example 11.

<Example 12>

N-vinylpyrrolidone and almost-fully saponified polyvinyl alcohol represented by Formula (2) described above (with a degree of saponification of 90% or more and a degree of polymerization of 1,100) were mixed at a ratio of 0.5: 0.5 on a solid weight basis and graft polymerized to give a modified polyvinyl alcohol. 90g of an aqueous modified polyvinyl alcohol solution that was prepared by adding pure water to the resultant modified polyvinyl alcohol to adjust the solid concentration to 3% and 10g of an aqueous crosslinking agent solution that was prepared by adding water to 1,2,3,4-butane tetracarboxylic acid as the crosslinking agent to adjust the solid concentration to 3% were mixed to give the hydrophilizing agent of Example 12.

<Example 13>

N-vinylpyrrolidone and partially saponified polyvinyl alcohol represented by Formula (2) described above (with a degree of saponification of 70% or more and a degree of polymerization of 1,100) were mixed at a ratio of 0.5:0.5 on a solid weight basis and graft polymerized to give a modified polyvinyl alcohol. 90g of an aqueous modified polyvinyl alcohol solution that was prepared by adding pure water to the resultant modified polyvinyl alcohol to adjust the solid concentration to 3% and 10g of an aqueous crosslinking agent solution that was prepared by adding water to 1,2,3,4-butane tetracarboxylic acid as the crosslinking agent to adjust the solid concentration to 3% were mixed to give the hydrophilizing agent of Example 13.

<Example 14>

N-vinylpyrrolidone and almost-fully saponified and carboxyl modified polyvinyl alcohol represented by Formula (2) described above (with a degree of saponification of 90% or more and a degree of polymerization of 1,100) were mixed at a ratio of 0.2:0.8 on a solid weight basis and graft polymerized to give a modified polyvinyl alcohol. 90g of an aqueous modified polyvinyl alcohol solution that was prepared by adding pure water to the resultant modified polyvinyl alcohol to adjust the solid concentration to 3% and 10g of an aqueous crosslinking agent solution that was prepared by adding water to 1,2,3,4-butane tetracarboxylic acid as the crosslinking agent to adjust the solid concentration to 3% were mixed to give the hydrophilizing agent of Example 14.

<Example 15>

N-vinylpyrrolidone and fully saponified polyvinyl alcohol represented by Formula (2) described above (with a degree of saponification of 98% or more and a degree of polymerization of 1,700) were mixed at a ratio of 0.2:0.8 on a solid weight basis and graft polymerized to give a modified polyvinyl alcohol. 90g of an aqueous modified polyvinyl alcohol solution that was prepared by adding pure water to the resultant modified polyvinyl alcohol to adjust the solid concentration to 3% and 10g of an aqueous crosslinking agent solution that was prepared by adding water to ammonium zirconium carbonate as the crosslinking agent to adjust the solid ($ZrO_2$) concentration to 3% were mixed to give the hydrophilizing agent of Example 15.

<Example 16>

N-vinylpyrrolidone and fully saponified polyvinyl alcohol represented by Formula (2) described above (with a degree of saponification of 98% or more and a degree of polymerization of 1,700) were mixed at a ratio of 0.2:0.8 on a

solid weight basis and graft polymerized to give a modified polyvinyl alcohol. 90g of an aqueous modified polyvinyl alcohol solution that was prepared by adding pure water to the resultant modified polyvinyl alcohol to adjust the solid concentration to 3% and 10g of an aqueous crosslinking agent solution that was prepared by adding water to nitrilotris methylene phosphonic acid (NTMP) as the crosslinking agent to adjust the solid concentration to 3% were mixed to give the hydrophilizing agent of Example 16.

<Example 17>

N-vinylpyrrolidone and fully saponified polyvinyl alcohol represented by Formula (2) described above (with a degree of saponification of 98% or more and a degree of polymerization of 1,700) were mixed at a ratio of 0.2:0.8 on a solid weight basis and graft polymerized to give a modified polyvinyl alcohol. 90g of an aqueous modified polyvinyl alcohol solution that was prepared by adding pure water to the resultant modified polyvinyl alcohol to adjust the solid concentration to 3% and 10g of an aqueous crosslinking agent solution that was prepared by adding water to 2-phosphonobutane-1,2,4-tricarboxylic acid (PBTC) as the crosslinking agent to adjust the solid concentration to 3% were mixed to give the hydrophilizing agent of Example 17.

<Example 18>

N-vinylpyrrolidone and fully saponified polyvinyl alcohol represented by Formula (2) described above (with a degree of saponification of 98% or more and a degree of polymerization of 500) were mixed at a ratio of 0.2:0.8 on a solid weight basis and graft polymerized to give a modified polyvinyl alcohol. 90g of an aqueous modified polyvinyl alcohol solution that was prepared by adding pure water to the resultant modified polyvinyl alcohol to adjust the solid concentration to 3% and 10g of an aqueous crosslinking agent solution that was prepared by adding water to citric acid as the crosslinking agent to adjust the solid concentration to 3% were mixed to give the hydrophilizing agent of Example 18.

<Comparative Example 1>

N-vinylpyrrolidone and fully saponified polyvinyl alcohol represented by Formula (2) described above (with a degree of saponification of 98% or more and a degree of polymerization of 1,100) were mixed at a ratio of 0.5:0.5 on a solid weight basis and graft polymerized to give a modified polyvinyl alcohol. Pure water was added to the resultant modified polyvinyl alcohol to adjust the solid concentration to 3% to give the hydrophilizing agent of Comparative Example 1.

<Comparative Example 2>

N-vinylpyrrolidone and fully saponified polyvinyl alcohol represented by Formula (2) described above (with a degree of saponification of 98% or more and a degree of polymerization of 1,100) were mixed at a ratio of 0.5:0.5 on a solid weight basis and graft polymerized to give a modified polyvinyl alcohol. 30g of an aqueous modified polyvinyl alcohol solution that was prepared by adding pure water to the resultant modified polyvinyl alcohol to adjust the solid concentration to 3% and 70g of an aqueous crosslinking agent solution that was prepared by adding water to 1,2,3,4-butane tetracarboxylic acid as the crosslinking agent to adjust the solid concentration to 3% were mixed to give the hydrophilizing agent of Comparative Example 2.

<Comparative Example 3>

N-vinylpyrrolidone and fully saponified polyvinyl alcohol represented by Formula (2) described above (with a degree of saponification of 98% or more and a degree of polymerization of 1,100) were mixed at a ratio of 0.05:0.95 on a solid weight basis and graft polymerized to give a modified polyvinyl alcohol. 90g of an aqueous modified polyvinyl alcohol solution that was prepared by adding pure water to the resultant modified polyvinyl alcohol to adjust the solid concentration to 3% and 1 0g of an aqueous crosslinking agent solution that was prepared by adding water to 1,2,3,4-butane tetracarboxylic acid as the crosslinking agent to adjust the solid concentration to 3% were mixed to give the hydrophilizing agent of Comparative Example 3.

<Comparative Example 4>

N-vinylpyrrolidone and fully saponified polyvinyl alcohol represented by Formula (2) described above (with a degree of saponification of 98% or more and a degree of polymerization of 1,100) were mixed at a ratio of 0.95:0.05 on a solid weight basis and graft polymerized to give a modified polyvinyl alcohol. 90g of an aqueous modified polyvinyl

alcohol solution that was prepared by adding pure water to the resultant modified polyvinyl alcohol to adjust the solid concentration to 3% and 10g of an aqueous crosslinking agent solution that was prepared by adding water to 1,2,3,4-butane tetracarboxylic acid as the crosslinking agent to adjust the solid concentration to 3% were mixed to give the hydrophilizing agent of Comparative Example 4.

<Comparative Example 5>

50g of an aqueous polyvinylpyrrolidone solution that was prepared by adding pure water to polyvinylpyrrolidone (available from ISP Japan Ltd., PVP K30 grade) to adjust the solid concentration to 3% and 50g of an aqueous polyvinyl alcohol solution that was prepared by adding pure water to fully saponified polyvinyl alcohol represented by Formula (2) described above (with a degree of saponification of 98% or more and a degree of polymerization of 1,100) to adjust the solid concentration to 3% were mixed to give the hydrophilizing agent of Comparative Example 5.

<Comparative Example 6>

90g of the hydrophilizing agent of Comparative Example 5 and 10g of an aqueous crosslinking agent solution that was prepared by adding water to 1,2,3,4-butane tetracarboxylic acid as the crosslinking agent to adjust the solid concentration to 3% were mixed to give the hydrophilizing agent of Comparative Example 6.

[Table 1]

| Table 1A. Composition of Hydrophilizing Agents (Examples) | | | | |
|---|---|---|---|---|
| | Modified Polyvinyl Alcohol (A) | | | |
| | N-Vinyl Lactam (i) | Polyvinyl Alcohol (ii) | | (i):(ii) (Solid Ratio) |
| | | Classification | Degree of Polymerization | |
| Example 1 | N-Vinylcaprolactam + N-Vinylpyrrolidone (Solid Weight Ratio≒1:1) | Fully Saponified | 1100 | 0.1:0.9 |
| Example 2 | N-Vinylcaprolactam + N-Vinylpyrrolidone (Solid Weight Ratio≒1:1) | Fully Saponified | 1100 | 0.5:0.5 |
| Example 3 | N-Vinylpyridone + N-Vinylpyridone (Solid Weight Ratio≒1:1) | Fully Saponified | 1100 | 0.5:0.5 |
| Example 4 | N-Vinylpyridone + N-Caprolactam (Solid Weight Ratio≒1:1) | Fully Saponified | 1100 | 0.5:0.5 |
| Example 5 | N-vinylcaprolactam + N-Vinylpyrrolidone (solid Weight Ratio≒1:1) | Fully Saponified | 1100 | 0.9:0.1 |
| Example 6 | N-Vinylcaprolactam + N-Vinylpyrrolidone (Solid Weight Ratio≒1:1) | Fully Saponified | 400 | 0.2:0.8 |
| Example 7 | N-Vinylcaprolactam + N-Vinylpyrrolidone (Solid Weight Ratio≒1:1) | Fully Saponified | 1700 | 0.2:0.8 |

(continued)

| Table 1A. Composition of Hydrophilizing Agents (Examples) | | | | |
|---|---|---|---|---|
| | Modified Polyvinyl Alcohol (A) | | | |
| | N-Vinyl Lactam (i) | Polyvinyl Alcohol (ii) | | (i):(ii) (Solid Ratio) |
| | | Classification | Degree of Polymerization | |
| Example 8 | N-Vinylcaprolactam + N-Vinylpyrrolidone (Solid Weight Ratio≒1: 1) | Fully Saponified | 3000 | 0.8:0.2 |
| Example 9 | N- Vinylcaprolactam | Fully Saponifed | 1100 | 0.5:0.5 |
| Example 10 | 3-Methyl-N-Vinylpyrrolidone | Fully Saponified | 1100 | 0.5:0.5 |
| Example 11 | N-Vinylpyrrolidone | Fully Saponified | 1100 | 0.5:0.5 |
| Example 12 | N-Vinylpyrrolidone | Almost-Fully Saponified | 1100 | 0.5:0.5 |
| Example 13 | N-Vinylpyrrolidone | Partially Saponified | 1100 | 0.5:0.5 |
| Example 14 | N-Vinylpyrrolidone | Carboxylic Group Containing | 1100 | 0.2:0.8 |
| Example 15 | N-Vinylpyrrolidone | Fully Saponified | 1700 | 0.2:0.8 |
| Example 16 | N-Vinylpyrrolidone | Fully Saponified | 1700 | 0.2:0.8 |
| Example 17 | N-Vinylpyrrolidone | Fully Saponified | 1700 | 0.2:0.8 |
| Example 18 | N-Vinylpyrrolidone | Fully Saponified | 1700 | 0.2:0.8 |

| Table 1B. Composition of Hydrophilizing Agents (Examples) | | | |
|---|---|---|---|
| | Water-Soluble Crosslinking Agent (B) | Composition of Treatment Agent (Solid Ratio) | |
| | | (A) | (B) |
| Example 1 | BTC | 90 | 10 |
| Example 2 | BTC | 90 | 10 |
| Example 3 | BTC | 90 | 10 |
| Example 4 | BTC | 90 | 10 |
| Example 5 | BTC | 90 | 10 |
| Example 6 | BTC | 90 | 10 |
| Example 7 | BTC | 90 | 10 |
| Example 8 | BTC | 90 | 10 |
| Example 9 | BTC | 90 | 10 |
| Example 10 | BTC | 90 | 10 |
| Example 11 | BTC | 90 | 10 |
| Example 12 | BTC | 90 | 10 |
| Example 13 | BTC | 90 | 10 |
| Example 14 | BTC | 90 | 10 |
| Example 15 | Ammonium Zirconium Carbonate | 90 | 10 |
| Example 16 | NTMP | 90 | 10 |

(continued)

| Table 1B. Composition of Hydrophilizing Agents (Examples) | | | |
|---|---|---|---|
| | Water-Soluble Crosslinking Agent (B) | Composition of Treatment Agent (Solid Ratio) | |
| | | (A) | (B) |
| Example 17 | PBTC | 90 | 10 |
| Example 18 | Citric Acid | 90 | 10 |

[Table 2]

| Table 2A. Composition of Hydrophilizing Agents (Comparative Example) | | | | |
|---|---|---|---|---|
| | Modified Polyvinyl Alcohol (A) | | | |
| | N-Vinyl Lactam (i) | Polyvinyl Alcohol (ii) | | (i):(ii) (Solid Ratio) |
| | | Classification | Degree of Polymerizat | |
| Comparative Example 1 | N-Vinylpyrrolidone | Fully Saponified | 1100 | 0.5:0.5 |
| Comparative Example 2 | N-Vinylpyrrolidone | Fully Saponified | 1100 | 0.5:0.5 |
| Comparative Example 3 | N-Vinylpyrrolidone | Fully Saponified | 1100 | 0.05:0.95 |
| Comparative Example 4 | N-Vinylpyrrolidone | Fully Saponified | 1100 | 0.95:0.05 |
| Comparative Example 5 | PVP (K30 grade) + PVA(ii)(Fully Saponified, Degree of Polymerization 1700) | | | 0.5:0.5 |
| Comparative Example 6 | PVP (K30 grade) + PVA(ii)(Fully Saponified, Degree of Polymerization 1700) | | | 0.5:0.5 |

| Table 2B. Composition of Hydrophilizing Agents (Comparative Example) | | | |
|---|---|---|---|
| | Water-Soluble Crosslinking Agent (B) | Composition of Treatment Agent (Solid Ratio) | |
| | | (A) | (B) |
| Comparative Example 1 | None | 100 | 0 |
| Comparative Example 2 | BTC | 30 | 70 |
| Comparative Example 3 | BTC | 90 | 10 |
| Comparative Example 4 | BTC | 90 | 10 |
| Comparative Example 5 | None | 100 | 0 |
| Comparative Example 6 | BTC | 90 | 10 |

The hydrophilic coated aluminum materials that were formed by using a hydrophilizing agent prepared with the compositions shown in Table 1 and 2 and the hydrophilizing method described below were evaluated by the evaluation

methods as described below.

<Test Material>

An aluminum alloy material that corresponds to a commercially available material of JIS A 1000 and that has a thickness of 0.8mm, a width of 70mm, and a length of 150mm was used.

<Cleaning Method of the Test Materials>

The test materials as described above were immersed for 2 minutes in a bath where the temperature is set to 60°C and containing alkaline degreasing agent "FINECLEANER™ 315" (available from Nihon Parkerizing Co., Ltd.) at an agent concentration of 20g/L; and the dust and oil resting on the surface were removed; and after that, the alkalinity resting on the surface were washed with tap water.

<Method for Forming Hydrophilic Coating Film>

Each of the test materials cleaned as described above were immersed in each of the hydrophilizing agents of Examples 1-18 and Comparative Examples 1-6, and then suspended in a blow drier at 160°C for 6 minutes for heat-drying to give the test plates with a dried coating film amount of 0.5g/m2 for use in the evaluation test as described below.

<Evaluation of Wettability for Due Condensation>

The surface of the test plates was cooled to 5°C and the plates were placed for 5 minutes in a steady temperature- and humidity-controlled room conditioned at a temperature of 25°C and a humidity of 60% to condense moisture on the surface of the plates. Then, the due condensation on the surface of the plates was evaluated visually. For use in the evaluation, the hydrophilized test plates were cut into 40mm × 40mm, immersed in deionized water for 100 hours, and dried.

<Criteria for Evaluating Wettability for Due Condensation>

The wetting appearance shown in Table 3 was used as the criteria to evaluate the wettability for due condensation of the test plates treated with the hydrophilizing agents of Examples 1-18 and Comparative Examples 1-6.
[Table 3]

| Table 3. Wetting Appearance as Evaluation Criteria | | |
|---|---|---|
| Evaluation | Reference Appearance | Condition |
| ◎ | 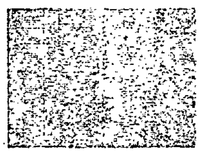 | The entire surface is uniformly wet. |
| ○ | 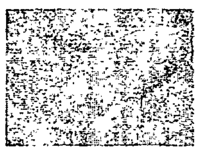 | Drops of dew condensation water are present at from 10% inclusive to 30% exclusive. |
| Δ | 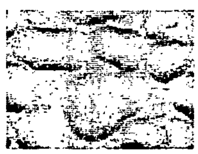 | Drops of dew condensation water are present at from 30% inclusive to 50% exclusive. |

(continued)

| Table 3. Wetting Appearance as Evaluation Criteria | | |
|---|---|---|
| Evaluation | Reference Appearance | Condition |
| × | 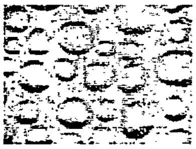 | Drops of dew condensation water are present at 50% or more. |
| Legend: ◎ (Double-circle) means "excellent"<br>○ (Single-circle) means "good"<br>Δ (Triangle) means "relatively poor"<br>× (Cross mark) means "unacceptable" | | |

<Test for Evaluating Water Resistance>

The test plates were immersed in deionized water for 100 hours and heat-dried for an hour in a blow drier at 50°C. After cooling to room temperature, the plates were weighed to determine the percentage of remaining hydrophilic coating film using the following formula.

$$\text{Percentage of Remaining Hydrophilic Coating Film} = (C-A)/(B-A) \times 100\ (\%)$$

A: Weight of Test Material Before Hydrophilization (g)
B: Weight of Test Material After Hydrophilization (g)
C: Weight of Test Material After Hydrophilization, Immersion in Deionized Water for 100 Hours, and Drying

<Criteria for Evaluating Water Resistance>

Double-circle (excellent): Percentage of Remaining Hydrophilic Coating Film of 90% or more
Single-circle (good): Percentage of Remaining Hydrophilic Coating Film of from 70% Inclusive to 90% Exclusive
Triangle (relatively poor): Percentage of Remaining Hydrophilic Coating Film of from 50% Inclusive to 70% Exclusive
Cross mark (unacceptable): Percentage of Remaining Hydrophilic Coating Film of Less Than 50%

<Test for Evaluating Hydrophilicity>

2μl of deionized water was dropped on the test plates, and a contact angle with a drop of water formed was measured with a contact angle meter (Contact Angle Meter CA-X manufactured by Kyowa Interface Science Co., Ltd.). The initial contact angle with the coating film immediately after the treatment with the hydrophilizing agents and the contact angle after the immersion in deionized water for 100 hours were measured.

<Criteria for Evaluating Hydrophilicity>

Double-circle (excellent): Contact Angle of less than 10°
Single-circle (good): Contact Angle of from 10° inclusive to 30° exclusive
Triangle (relatively poor): Contact Angle of from 30° inclusive to 40° exclusive
Cross mark (unacceptable): Contact Angle of 40° or more

In the performance evaluations described above, the plates with a Single-circle (good) or better grade were considered as acceptable for the hydrophilicity (the initial contact angle and the contact angle after the immersion) and

the wettability for due condensation, while the plates with a Triangle (relatively poor) or better grade were considered as acceptable for the water resistance, taking into account that the acceptable level varies depending on the application environment. The evaluation results are shown in Table 4.

[Table 4]

Table 4. Evaluation Results of Hydrophilic Coating Films

| | Wettability for Due Condensation | Hydrophilicity (Contact Angle) | | Water Resistance |
|---|---|---|---|---|
| | | Initial | After Immersion | |
| Example 1 | ○ | ◎ | ○ | ○ |
| Example 2 | ◎ | ◎ | ◎ | ◎ |
| Example 3 | ◎ | ◎ | ○ | ○ |
| Example 4 | ○ | ◎ | ○ | ○ |
| Example 5 | ◎ | ◎ | ○ | Δ |
| Example 6 | ◎ | ◎ | ○ | ○ |
| Example 7 | ◎ | ◎ | ◎ | ○ |
| Example 8 | ◎ | ◎ | ◎ | ◎ |
| Example 9 | ○ | ◎ | ○ | ○ |
| Example 10 | ○ | ◎ | ○ | ○ |
| Example 11 | ○ | ◎ | ○ | ○ |
| Example 12 | ◎ | ◎ | ◎ | ◎ |
| Example 13 | ○ | ◎ | ○ | Δ |
| Example 14 | ○ | ◎ | ○ | Δ |
| Example 15 | ○ | ◎ | ○ | ◎ |
| Example 16 | ◎ | ◎ | ◎ | ◎ |
| Example 17 | ◎ | ◎ | ◎ | ◎ |
| Example 18 | ○ | ◎ | ◎ | ◎ |
| Comparative Example 1 | × | ◎ | ○ | × |
| Comparative Example 2 | × | ◎ | Δ | Δ |
| Comparative Example 3 | Δ | ○ | ○ | ◎ |
| Comparative Example 4 | Δ | ◎ | Δ | × |
| Comparative Example 5 | × | ◎ | ○ | Δ |
| Comparative Example 6 | × | ◎ | ○ | ◎ |
| Legend: ◎ (Double-circle) means "excellent"<br>○ (Single-circle) means "good"<br>Δ (Triangle) means "relatively poor"<br>× (Cross mark) means "unacceptable" | | | | |

As is clear from the results shown in Table 4, all of the hydrophilic coating films formed by using the hydrophilizing agents of Examples 1-18 have excellent wettability for due condensation, excellent hydrophilicity and durability of the hydrophilicity (immediately after the treatment and after the immersion), and excellent water resistance.

On the other hand, both of Comparative Example 1, which is a hydrophilizing agent without adding water-soluble crosslinking agent, and Comparative Example 2, which is a hydrophilizing agent with a water-soluble crosslinking excessively added, do not have excellent wettability for due condensation. Also, their water resistance and the durability of their hydrophilicity were changed due to the excess or deficiency of the crosslinking agent. These results indicate that

the crosslinking agent is necessary and that there is an optimum range of the amount of the crosslinking agent. Both of Comparative Examples 3 and 4, which are a hydrophilizing agent obtained from a modified polyvinyl alcohol formed by graft polymerization with insufficient or excessive mixing ratio of N-vinylpyrrolidone respectively, do not have excellent wettability for due condensation. The results indicate that there is an optimum range of the mixing ratio for N-vinyl lactam types. Comparative Examples 5 and 6, which are a hydrophilizing agent formed by simply adding a homopolymer of polyvinylpyrrolidone (with a PVP K30 grade) to polyvinyl alcohol and adding or not adding the crosslinking agent, have inferior wettability for due condensation, although they have good hydrophilicity (contact angle). The results are different from those obtained by the hydrophilizing agent according to the invention, which is a hydrophilizing agent obtained from a modified polyvinyl alcohol formed by graft polymerization of N-vinyl lactam.

<Contact Angles and Wettability for Due Condensation>

Next, the contact angles and the wettability for due condensation will be discussed. FIG. 3 is a graph showing the relationship between "contact angle", which is a general indicator for evaluating hydrophilicity and used as the indicator in the invention, and "wettability for due condensation", which is used as another evaluation indicator in the invention. In the plots in FIG. 3, the contact angle obtained by examining each of the hydrophilic coating films formed from Examples 1-18 and Comparative Examples 1-6 is plotted along the abscissa, and the wettability for due condensation is plotted along the ordinate. For the wettability for due condensation shown in FIG.3, the grades 4, 3, 2, and 1 represent Double-circle (excellent), Single-circle (good), Triangle (relatively poor), and Cross mark (unacceptable) in Table 3, respectively.

As shown in FIG. 3, the smaller contact angle was, the more likely the wettability for due condensation was to improve, but even in the range where the contact angle is of 40° or less and generally considered to be as hydrophilic, there was a difference in wettability for due condensation. In other words, some plates with a small contact angle of 10° or less had insufficient wettability for due condensation, while some plates with a contact angle of from about 30° to about 40° had sufficient wettability for due condensation. The results show that even a coating film considered as hydrophilic from the contact angle may generate drops of dew condensation water as shown in "Triangle (relatively poor) " and " Cross mark (unacceptable) " in Table 3 and cause clogging between the fins. Accordingly, it is desirable to evaluate the ability of a coating film to prevent dew condensation water from causing the clogging of the fins by using not only the contact angles, but also the wettability for due condensation as described herein. Especially, the method as described herein, in which the wettability is evaluated with focusing on the wetting-out in the early stage of due condensation (the surface condition is evaluated after moisture is condensed on the surface for 5 minutes) can be said to be a practical evaluation method. The hydrophilizing agents that meet the evaluation criteria can solve the problems of the invention.

[Description of the Reference Numerals]

1: Aluminum-Containing Metal Material (Material to be Coated)
2 and 2': Corrosion Resistant Coating Film
3 and 3': Hydrophilic Coating Film
10: Aluminum-Containing Metal Material Provided with Hydrophilic Coating Film
20: Heat Exchanger (Aluminum-Containing Metal Material Provided with Hydrophilic Coating Film)
21: Radiators (Fins)
22: Refrigerant Pipes (Tubes)

## Claims

**1.** A hydrophilizing agent for an aluminum-containing metal material, the hydrophilizing agent comprising:

a modified polyvinyl alcohol having a polymer and/or copolymer of at least one type of N-vinyl lactam in a side chain of the polyvinyl alcohol having vinyl alcohol and vinyl acetate as its components; and
a water-soluble crosslinking agent capable of binding the lactam moiety and/or the hydroxyl group of the modified polyvinyl alcohol.

**2.** The hydrophilizing agent for an aluminum-containing metal material according to claim 1, wherein the modified polyvinyl alcohol is represented by the following Formula (1):

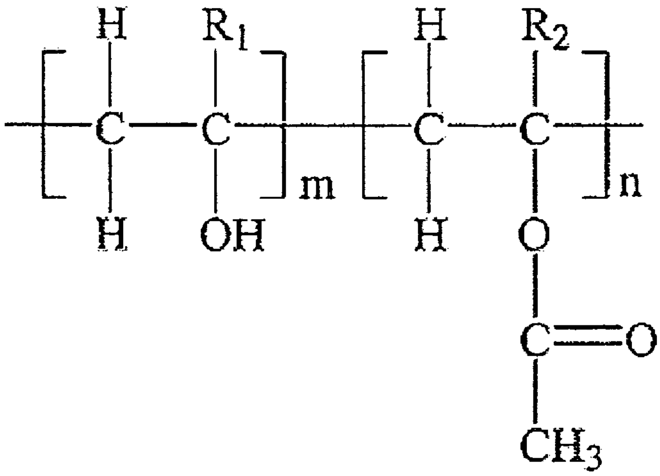

(1)

wherein $R_1$ and $R_2$ are the same or different side chain; part or all of $R_1$ and $R_2$ is a polymer and/or copolymer of at least one type of N-vinyl lactam that is graft polymerized; and $R_1$ and $R_2$ that is not graft polymerized represent H.

**3.** The hydrophilizing agent for an aluminum-containing metal material according to claim 1 or 2, wherein the modified polyvinyl alcohol is obtained by mixing and graft polymerizing of at least one type of N-vinyl lactam (i) with polyvinyl alcohol (ii) at a ratio of (i):(ii)=0.1:0.9 to 0.9:0.1 on a solid weight basis.

**4.** The hydrophilizing agent for an aluminum-containing metal material according to any one of claims 1 to 3, wherein part or all of the at least one type of N-vinyl lactam is N-vinylpyrrolidone.

**5.** The hydrophilizing agent for an aluminum-containing metal material according to any one of claims 1 to 4, wherein the water-soluble crosslinking agent has one or more organic compounds that have two or more of one or more functional groups selected from a carboxyl group, a phosphonic group, and a hydroxyl group.

**6.** A hydrophilizing method comprising:

applying the hydrophilizing agent according to any one of claims 1 to 5 to part or all of the surface of an untreated or cleaned aluminum-containing metal material; and
drying the agent to form a coating film.

**7.** An aluminum-containing metal material having on part or all of its surface a hydrophilic coating film composed of the hydrophilizing agent, the hydrophilic coating film comprising:

a modified polyvinyl alcohol having a polymer and/or copolymer of at least one type of N-vinyl lactam in a side chain of the polyvinyl alcohol having vinyl alcohol and vinyl acetate as its components; and
a water-soluble crosslinking agent capable of binding the lactam moiety and/or the hydroxyl group of the modified polyvinyl alcohol.

## Patentansprüche

**1.** Hydrophilisierungsmittel für ein Aluminium enthaltendes Metallmaterial, wobei das Hydrophilisierungsmittel umfasst:

einen modifizierten Polyvinylalkohol mit einem Polymer und/oder einem Copolymer von mindestens einem Typ von N-Vinyllactam in einer Seitenkette des Polyvinylalkohols mit Vinylalkohol und Vinylacetat als dessen Komponenten; und
ein wasserlösliches Vernetzungsmittel, welches in der Lage ist, die Lactamgruppe und/oder die Hydroxylgruppe des modifizierten Polyvinylalkohols zu binden.

**2.** Hydrophilisierungsmittel für ein Aluminium enthaltendes Metallmaterial nach Anspruch 1, wobei der modifizierte Polyvinylalkohol durch die folgende Formel (1) dargestellt wird:

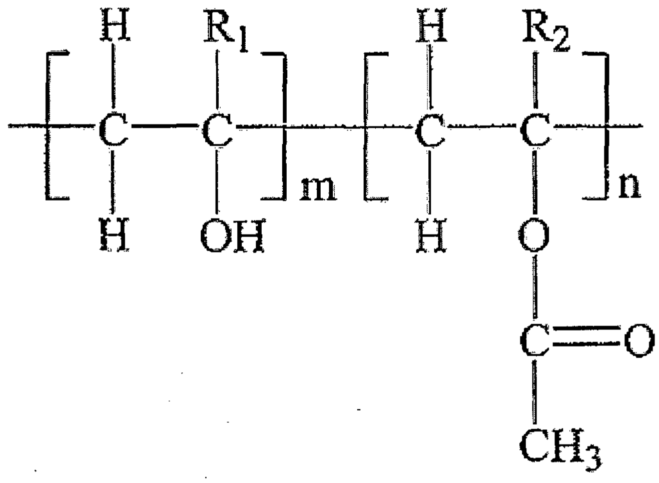

(1)

worin $R_1$ und $R_2$ gleiche oder verschiedene Seitenketten sind; einige oder alle $R_1$ und $R_2$ ein Polymer und/oder Copolymer von mindestens einem Typ von N-Vinyllactam, das pfropfpolymerisiert ist, ist bzw. sind; und $R_1$ und $R_2$, die nichtpfropfpolymerisiert sind, für H stehen.

3. Hydrophilisierungsmittel für ein Aluminium enthaltendes Metallmaterial nach Anspruch 1 oder 2, wobei der modifizierte Polyvinylalkohol erhalten ist durch Vermischen und Pfropfpolymerisieren von mindestens einem Typ von N-Vinyllactam (i) mit Polyvinylalkohol (ii) in einem Verhältnis von (i):(ii) = 0,1:0,9 bis 0,9:0,1, bezogen auf das Feststoffgewicht.

4. Hydrophilisierungsmittel für ein Aluminium enthaltendes Metallmaterial nach einem der Ansprüche 1 bis 3, wobei einige oder alle von dem mindestens einem Typ von N-Vinyllactam N-Vinylpyrrolidon sind.

5. Hydrophilisierungsmittel für ein Aluminium enthaltendes Metallmaterial nach einem der Ansprüche 1 bis 4, wobei das wasserlösliche Vernetzungsmittel eine oder mehr organische Verbindungen aufweist, die zwei oder mehr von einer oder mehreren funktionellen Gruppen, ausgewählt aus einer Carboxylgruppe, einer Phosphongruppe und einer Hydroxylgruppe, aufweisen.

6. Hydrophilisierungsverfahren, umfassend:

   Aufbringen des Hydrophilisierungsmittels nach einem der Ansprüche 1 bis 5 auf einen Teil oder die gesamte Oberfläche eines unbehandelten oder gereinigten Aluminium enthaltenden Metallmaterials; und
   Trocknen des Mittels, um einen Beschichtungsfilm zu bilden.

7. Aluminium enthaltendes Metallmaterial, welches auf einem Teil oder seiner gesamten Oberfläche einen hydrophilen Beschichtungsfilm aufweist, welcher aus dem Hydrophilisierungsmittel besteht, wobei der hydrophile Beschichtungsfilm umfasst:

   einen modifizierten Polyvinylalkohol mit einem Polymer und/oder Copolymer von mindestens einem Typ von N-Vinyllactam in einer Seitenkette des Polyvinylalkohols mit Vinylalkohol und Vinylacetat als dessen Komponenten; und
   ein wasserlösliches Vernetzungsmittel, das in der Lage ist, die Lactamgruppe und/oder die Hydroxylgruppe des modifizierten Polyvinylalkohols zu binden.

**Revendications**

1. Agent d'hydrophilisation pour un matériau métallique contenant de l'aluminium, l'agent d'hydrophilisation comprenant :

   un poly(alcool vinylique) modifié ayant un polymère et/ou un copolymère d'au moins un type de N-vinyl-lactame dans une chaîne latérale du poly(alcool vinylique) ayant un alcool vinylique et un acétate de vinyle comme

composants ; et
un agent de réticulation soluble dans l'eau capable de se lier au fragment lactame et/ou au groupe hydroxyle du poly(alcool vinylique) modifié.

**2.** Agent d'hydrophilisation pour un matériau métallique contenant de l'aluminium selon la revendication 1, dans lequel le poly(alcool vinylique) modifié est représenté par la formule (1) suivante :

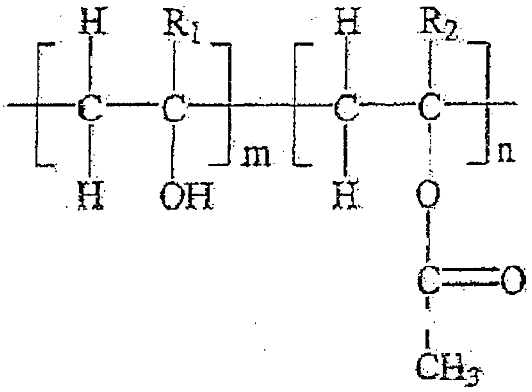

(1)

dans laquelle $R_1$ et $R_2$ sont une chaîne latérale identique ou différente ; tout ou partie de $R_1$ et $R_2$ est un polymère et/ou un copolymère d'au moins un type de N-vinyl-lactame qui est polymérisé par greffage ; et $R_1$ et $R_2$ qui ne sont pas polymérisés par greffage représentent H.

**3.** Agent d'hydrophilisation pour un matériau métallique contenant de l'aluminium selon la revendication 1 ou 2, dans lequel le poly(alcool vinylique) modifié est obtenu par mélange et polymérisation par greffage d'au moins un type de N-vinyl-lactame (i) avec un poly(alcool vinylique) (ii) à un rapport de (i) : (ii) = 0,1 : 0,9 à 0,9 : 0,1 sur une base de poids solide.

**4.** Agent d'hydrophilisation pour un matériau métallique contenant de l'aluminium selon l'une quelconque des revendications 1 à 3, dans lequel tout ou partie de l'au moins un type de N-vinyl-lactame est la N-vinylpyrrolidone.

**5.** Agent d'hydrophilisation pour un matériau métallique contenant de l'aluminium selon l'une quelconque des revendications 1 à 4, dans lequel l'agent de réticulation soluble dans l'eau a un ou plusieurs composés organiques qui ont deux d'un ou plusieurs groupes fonctionnels ou plus choisis parmi un groupe carboxyle, un groupe phosphonique et un groupe hydroxyle.

**6.** Procédé d'hydrophilisation comprenant :

l'application de l'agent d'hydrophilisation selon l'une quelconque des revendications 1 à 5 à tout ou partie de la surface d'un matériau métallique contenant de l'aluminium non traité ou nettoyé ; et
le séchage de l'agent afin de former un film de revêtement.

**7.** Matériau métallique contenant de l'aluminium ayant sur tout ou partie de sa surface un film de revêtement hydrophile composé de l'agent d'hydrophilisation, le film de revêtement hydrophile comprenant :

un poly(alcool vinylique) modifié ayant un polymère et/ou un copolymère d'au moins un type de N-vinyl-lactame dans une chaîne latérale du poly(alcool vinylique) ayant un alcool vinylique et un acétate de vinyle comme composants ; et
un agent de réticulation soluble dans l'eau capable de se lier au fragment lactame et/ou au groupe hydroxyle du poly(alcool vinylique) modifié.

Fig.1

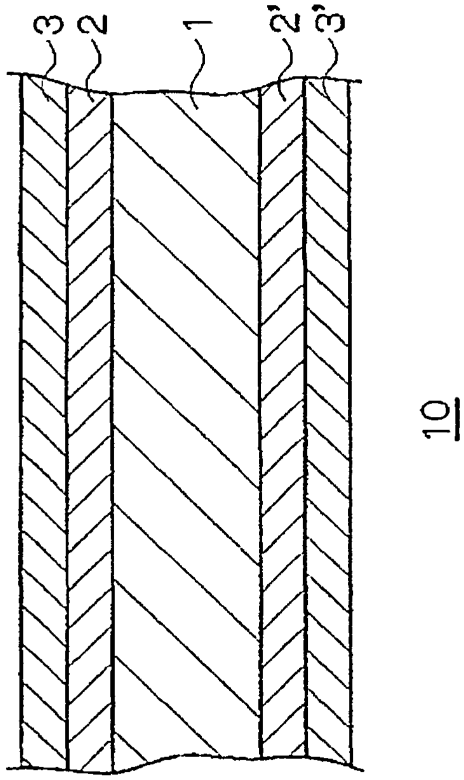

Fig.2

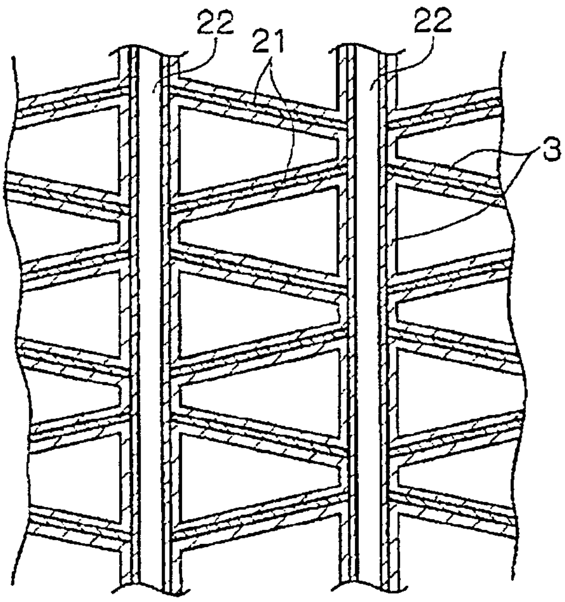


20

Fig.3

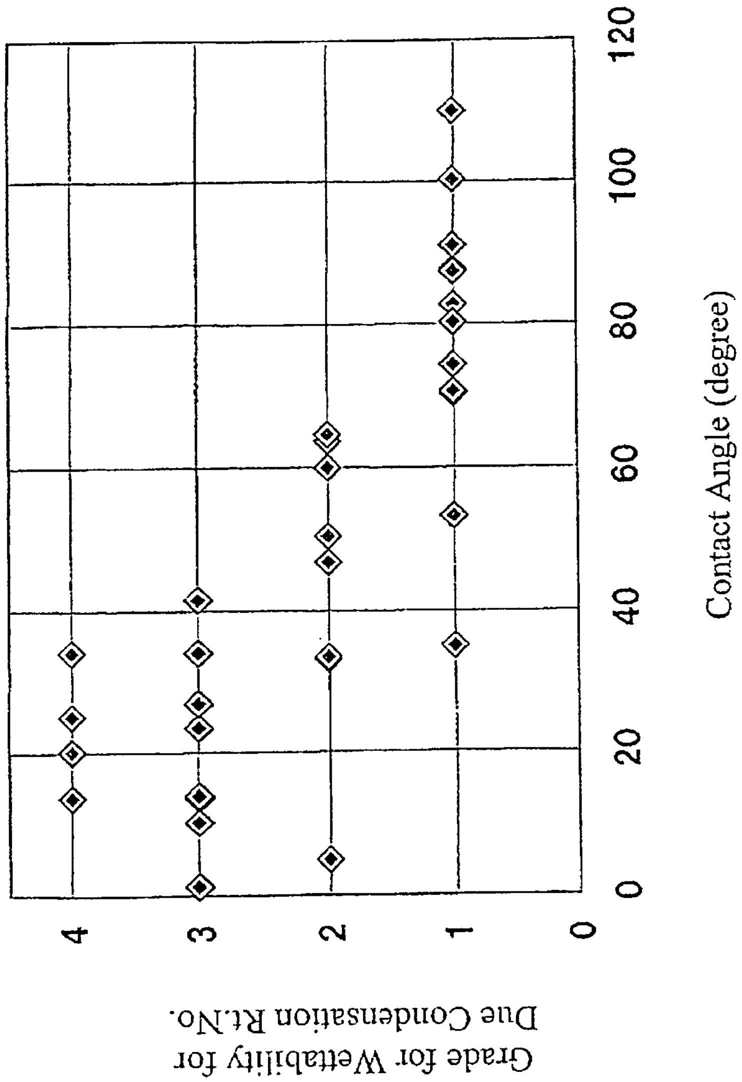

Grade for Wettability for Due Condensation Rt.No.
0
1
2
3
4
0
20
40
60
80
100
120
Contact Angle (degree)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 4366182 A
- JP 2000345362 A
- JP 2002030462 A